# EUROPÄISCHE PATENTANMELDUNG

(11) **EP 0 855 634 A1**
(43) Veröffentlichungstag der Anmeldung: **29.07.1998**
(21) Anmeldenummer: 98100556.4
(22) Anmeldetag: 14.01.1998
(51) Int. Cl.: G05D 9/12, H01M 10/48, H01M 2/36

(54) **Füllstandsregelung**

(30) Priorität: 27.01.1997 DE 19702855
(71) Anmelder: Linde Aktiengesellschaft, 65189 Wiesbaden (DE)
(72) Erfinder: Weis, Volker, 85276 Pfaffenhofen (DE)
(74) Vertreter: Kasseckert, Rainer

(57) **Zusammenfassung**

Die Erfindung betrifft ein Verfahren zur Regelung des Füllstandes eines mit Flüssigkeit befüllten Behälters, insbesondere einer naßchemischen Zelle. Der Füllstand (9) wird mittels eines optischen Sensors (4) mit einer Kontrollhöhe verglichen und bei unter der Kontrollhöhe liegendem Füllstand (9) Flüssigkeit in den Behälter (2) nachgefüllt. Das Nachfüllen erfolgt derart, daß nach dem Nachfüllen der Füllstand (9) oberhalb der Kontrollhöhe liegt.

## Beschreibung

Die Erfindung betrifft ein Verfahren zur Regelung des Füllstandes eines mit Flüssigkeit befüllten Behälters, insbesondere einer naßchemischen Zelle.

Bei Flüssigkeitsbehältern, insbesondere bei naßchemischen Zellen, ist es oftmals erforderlich den Füllstand innerhalb bestimmter Grenzen zu halten. Beispielsweise werden zur Bestimmung von Sauerstoffgehalten in inerten Reingasen galvanische Meßzellen, sog. Herschzellen, eingesetzt. Derartige Meßzellen werden zur permanenten Überwachung der Qualität von Gasen verwendet.

Wird in eine solche elektrochemische Zelle ein Sauerstoff enthaltendes Gas eingeleitet, so wird ein Stromfluß in der Zelle erzeugt. Unter der Voraussetzung, daß die Reduktion des Sauerstoffs in der Zelle proportional zum Sauerstoffgehalt im zugeführten Gas ist, stellt der Stromfluß durch die Zelle ein Maß für die Sauerstoffkonzentration im Gas dar. Als Elektrolyt findet häufig eine wäßrige KOH-Lösung Verwendung. Da die Meßzelle permanent mit einem sehr trockenen Gas durchspült wird, kommt es mit zunehmender Betriebsdauer zu einer Aufkonzentration des Elektrolyten, welche letztlich zu einem Dritten des Meßwertes führt. Um den kontinuierlichen Betrieb der Meßzelle zu gewährleisten, ist bisher eine häufige Wartung notwendig. Dabei wird der Füllstand in der Zelle auf den zulässigen Maximalwert durch Auffüllen mit destilliertem Wasser angehoben.

Zum Nachfüllen von Flüssigkeit in die Zelle muß die Zelle geöffnet werden. Dabei kommt es zu einem nicht unerheblichen Sauerstoffeintrag in die Zelle, der hauptsächlich durch die Löslichkeit des Sauerstoffs im Wasser verursacht wird. Es vergeht durchschnittlich eine Stunde bis die Meßzelle wieder vollständig einsetzbar ist.

Aufgabe vorliegender Erfindung ist es deshalb, ein Verfahren zu entwickeln, mit welchem der Füllstand eines Behälters, insbesondere einer naßchemischen Zelle, überwacht und gegebenenfalls korrigiert werden kann. Insbesondere soll das Verfahren beim Einsatz in elektrochemischen Meßzellen keinen Einfluß auf das Meßsignal ausüben. Die zur Durchführung des Verfahrens notwendigen Bauteile, die in Kontakt mit der Flüssigkeit kommen, sollen gegenüber Säuren und Laugen beständig sein.

Diese Aufgabe wird erfindungsgemäß dadurch gelöst, daß mittels eines optischen Sensors der Füllstand mit einer Kontrollhöhe verglichen wird, und daß bei unter der Kontrollhöhe liegendem Füllstand Flüssigkeit in den Behälter nachgefüllt wird, so daß nach dem Nachfüllen der Füllstand oberhalb der Kontrollhöhe liegt.

Zur Kontrolle des Füllstandes wird ein optischer Sensor in den Behälter eingebaut, der, je nach dem ob die Flüssigkeit oberhalb oder unterhalb einer gewissen Kontrollhöhe liegt, ein unterschiedliches Signal liefert. Aufgrund dieses Signals wird bei Unterschreiten der Kontrollhöhe Flüssigkeit in den Behälter nachgefüllt. Erfindungsgemäß wird das Nachfüllen von Flüssigkeiten in den Behälter nach Erreichen der Kontrollhöhe für eine bestimmte Zeit fortgesetzt. Dadurch wird ein gewisses Maß an Überfüllung erreicht. Dies hat den Vorteil, daß sich die Zeit bis zur nächsten Nachfüllung verlängert, d.h. eine Reduzierung der Taktzahl der Nachfüllungen erzielt wird. Bei Behältern, bspw. elektrochemischen Meßzellen, die zur kontinuierlichen, analytischen Überwachung eingesetzt werden, können somit die durch die Nachfüllung bedingten Ausfallzeiten stark reduziert werden.

Vorzugsweise wird ein optischer Sensor eingesetzt, der einen Lichtsender, z. B. eine LED, und einen Lichtempfänger, zum z.B. eine Fotodiode, aufweist, wobei der Lichtweg zwischen dem Lichtsender und dem Lichtempfänger vom Füllstand abhängt. Von der Fa. RS Components werden optische Sensoren angeboten, die auf dem Prinzip der Totalreflektion basieren. Eine LED und ein Fototransistor sind dabei so angeordnet, daß, sobald der Sensor mit Flüssigkeit bedeckt ist, der Lichtweg zwischen beiden unterbrochen wird und der Schaltpegel die Position "low" aufweist. Ist hingegen der Füllstand soweit gesunken, daß der Sensor nicht mehr mit Flüssigkeit bedeckt ist, wird der Lichtweg geschlossen und der Sensor steht auf der Position "high". Das Gehäuse des Sensor besteht aus Polysulfon und ist gegen eine Vielzahl von Laugen und Säuren beständig.

Der Einsatz derartiger Sensoren hat den Vorteil, daß keine Änderungen der elektrischen Leitfähigkeit in dem Behälter hervorgerufen werden, was insbesondere bei naßchemischen Meßzellen von Bedeutung ist. Zudem sind diese Sensoren relativ klein, so daß auch bei geringem Platzangebot, z.B. in kleinen Behältern, der Füllstand kontrolliert werden kann.

Es hat sich als günstig erwiesen, die Kontrollhöhe in die Mitte zwischen einer minimalen und einer maximalen Füllhöhe des Behälters zu legen. Die minimale bzw. maximale Füllhöhe ist häufig durch die Konstruktion oder den Verwendungszweck des Behälters vorgegeben. So hängt z.B. die ordnungsgemäße Funktion einer chemischen Naßzelle von ihrem Füllstand ab. Liegt die Kontrollhöhe im mittleren Drittel zwischen diesen beiden Grenzhöhen, so bleibt sowohl ein Unterschreiten der Kontrollhöhe, wie es bei Schwankungen des Füllstandes oder bei einem verzögerten Nachfüllen auftreten kann, als auch das Überschreiten der Kontrollhöhe, wie es durch das erfindungsgemäße Überfüllen erreicht wird, ohne negative Auswirkungen.

Eine besonders vorteilhafte Verringerung der Taktzahl der Nachfüllungen wird durch die Lage der Kontrollhöhe im unteren Drittel zwischen minimaler und maximaler Füllhöhe erzielt. Allgemein gilt, daß je näher sich die Kontrollhöhe an der unteren Füllgrenze befindet, desto größer kann die Überfüllung des Behälters ausfallen und desto geringer wird die Häufigkeit des Nachfüllens. Es ist jedoch darauf zu achten, daß die Kontrollhöhe soweit über der minimalen Füllhöhe liegt, daß z.B. auch bei Füllstandsschwankungen die minimale Füllhöhe nicht unterschritten wird.

Werden mit den erfindungsgemäß geregelten Behältern Messungen vorgenommen, deren Ergebnisse an andere Einheiten weitergegeben werden, z.B. Analysen der Sauerstoffkonzentration in Luftzerlegungsanlagen, so wird vorteilhaft während des Nachfüllens ein Signal abgegeben. Dieses Signal zeigt an, daß für den Zeitraum des Nachfüllens mit instabilen Meßwerten gerechnet werden muß. In der Regel wird hierzu ein von dem optischen Sensor direkt oder indirekt aktiviertes, elektrisches Signal abgegeben. Diese Signalabgabe wird von Vorteil immer dann eingesetzt, wenn das Nachfüllen des Behälters für irgendein anderes System von Bedeutung ist.

Das Nachfüllen des Behälters wird vorzugsweise über ein mit dem optischen Sensor in Wirkverbindung stehendes, abfallvertögertes Zeitrelais geregelt. Die Abfallverzögerung des Zeitrelais bewirkt, daß auch nach Erreichen der Kontrollhöhe, wenn der Schaltpegel des Sensors wieder in den Zustand "low" zurückgeht, eine bestimmte Zeit lang Flüssigkeit in den Behälter gefüllt wird. Besitzt das Zeitrelais eine Zeiteinstellfunktion, so kann die Nachfüllzeit der Einbauposition des Sensors, der minimalen und maximalen Füllhöhe sowie dem gewünschten Überfüllungsgrad angepaßt werden.

Das Verfahren zur Nachfüllung von Behältern weist mehrere Vorteile auf. Durch das automatische Nachfüllen kann das Wartungsintervall bei kontinuierlich eingesetzten Behältern auf ein Minimum reduziert werden. Beispielsweise kann auf das bei im Dauerbetrieb verwendeten, naßchemischen Zellen regelmäßige, z.B. wöchentliche, Nachfüllen verzichtet werden. Dies ist insbesondere bei extern betriebenen Monitoring Systemen von Vorteil, da unnötige Ausfälle wegen der Nichtbeachtung der Füllstandsüberwachung entfallen. Das Verfahren ist bei den meisten Behältern, und insbesondere bei allen gängigen Meßsystemen, welche auf elektrochemischen Meßzellen beruhen, einsetzbar. Die Nachrüstung bestehender Systeme ist ohne großen Aufwand möglich. Von besonderem Vorteil hat sich der Einsatz des Verfahrens bei Sauerstoffanalysatoren, die auf dem Prinzip der Hersch-Zelle beruhen, in Luftzerlegungsanlagen erwiesen.

Das erfindungsgemäße Verfahren wird im folgenden anhand der schematischen Zeichnung beispielhaft näher erläutert.

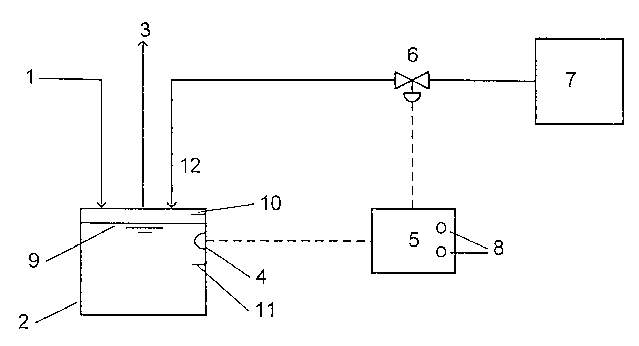

In der Figur ist eine elektrochemische Meßzelle 2 dargestellt, die zur Bestimmung des Sauerstoffgehalts eines inerten Reingases eingesetzt wird. Das zu untersuchende Reingas wird mit konstantem Fluß über Leitung 1 der Meßzelle 2, welche mit einer wäßrigen KOH-Lösung gefüllt ist, zugeführt und über Leitung 3 wieder abgeführt. Aus der Messung des in der Zelle 2 entstehenden Stromes kann der Sauerstoffgehalt des durchströmenden Gases bestimmt werden. Auf der Meßzelle 2 sind eine Markierung 10 für die maximale Füllhöhe und eine Markierung 11 für die minimale Füllhöhe angebracht. Für einen ordnungsgemäßen Betrieb muß sich der Füllstand 9 in der Zelle 2 immer zwischen diesen Markierungen 10 und 11 befinden.

In der Mitte zwischen den beiden Markierungen 10 und 11 ist in der Seitenwand der Zelle 2 ein optischer Sensor 4 angebracht, welcher auf dem Prinzip der Totalreflexion beruht. In dem Sensor 4 sind ein Phototransistor und eine LED so angeordnet, daß sobald der Sensor 4 mit Flüssigkeit bedeckt ist, der Lichtweg zwischen dem Phototransistor und der LED unterbrochen wird und der Schaltpegel des Sensors 4 die Position "low" aufweist. Ist hingegen der Füllstand 9 soweit gesunken, daß der Sensor 4 nicht mehr mit Flüssigkeit bedeckt ist, wird der Lichtweg geschlossen und der Sensorpegel steht auf der Position "high".

Der Sensor 4 ist mit einer Schalteinheit 5 verbunden, die eine rote und eine grüne LED 8 zur Anzeige des Betriebszustandes aufweist. Die Schalteinheit 5 beinhaltet unter anderem ein abfallverzögertes Zeitrelais, dessen Zeitverzögerung über ein Potentiometer eingestellt werden kann. An die Meßzelle 2 ist eine weitere Leitung 12 angeschlossen, über die aus einem Vorratsbehälter 7 die Zelle 2 bei Bedarf mit destilliertem Wasser versorgt wird. In der Leitung 12 befindet sich ein Ventil 6, welches über die Schalteinheit 5 angesteuert wird.

Sinkt während des Betriebs der Meßzelle 2 der Füllstand 9 soweit, daß der Sensor 4 nicht mehr bedeckt ist, so ändert sich dessen Schaltpegel von "low" nach "high". Daraufhin wird das abfallverzögerte Zeitrelais in der Schalteinheit 5 aktiviert, welches das Magnetventil 6 in der Zufuhrleitung 12 öffnet. Durch die Abfallverzögerung wird ein Überfüllen der Zelle 2, d.h. ein Ansteigen des Füllstandes 9 über die Sensorposition 4 hinaus, erreicht. Der Grad der Überfüllung ist in der Schalteinheit 5 spezifisch für diese Zelle 2 eingestellt, da der Überfüllungsgrad der Zelle 2 von der genauen Einbauposition des Sensors 4 abhängt.

Während das Zeitrelais aktiviert ist, d.h. während des Nachfüllens, leuchtet die rote LED 8. Dieses Signal zeigt an, daß während des Nachfüllens mit instabilen Meßwerten gerechnet werden muß. Nach Ablauf der am Zeitrelais eingestellten Zeit wird das Magnetventil 6 automatisch wieder geschlossen, die rote LED 8 erlischt und die grüne LED 8 leuchtet auf und signalisiert somit den Betriebszustand "bereit". Diese Art der Nachfüllung ergibt eine Laufzeit bis zur nächsten automatischen Füllung von einer Woche. In diesem Zeitraum bleibt der Sensor 4 von Flüssigkeit bedeckt und damit der Schaltpegel des Sensors 4 auf "low".

## Patentansprüche

1. Verfahren zur Regelung des Füllstandes eines mit Flüssigkeit befüllten Behälters, insbesondere einer naßchemischen Zelle, **dadurch gekennzeichnet**, daß mittels eines optischen Sensors (4) der Füllstand (9) mit einer Kontrollhöhe verglichen wird, und daß bei unter der Kontrollhöhe liegendem Füllstand (9) Flüssigkeit in den Behälter (2) nachgefüllt wird, so daß nach dem Nachfüllen der Füllstand (9) oberhalb der Kontrollhöhe liegt.

2. Verfahren nach Anspruch 1, dadurch gekennzeichnet, daß der Füllstand (9) in einer elektrochemischen Zelle zur Bestimmung des Sauerstoffgehaltes in Gasen geregelt wird.

3. Verfahren nach einem der Ansprüche 1 oder 2, dadurch gekennzeichnet, daß der optische Sensor (4) mit einem Lichtsender und einen Lichtempfänger versehen ist und daß der Lichtweg zwischen dem Lichtsender und dem Lichtempfänger vom Füllstand (9) abhängt.

4. Verfahren nach einem der Ansprüche 1 bis 3, dadurch gekennzeichnet, daß die Kontrollhöhe im mittleren Drittel zwischen einer minimalen (11) und einer maximalen Füllstandsgrenze (10) des Behälters (2) liegt.

5. Verfahren nach einem der Ansprüche 1 bis 4, dadurch gekennzeichnet, daß während des Nachfüllens ein Signal abgegeben wird.

6. Verfahren nach einem der Ansprüche 1 bis 5, dadurch gekennzeichnet, daß das Nachfüllen über ein mit dem optischen Sensor (4) in Wirkverbindung stehendes abfallverzögertes Zeitrelais geregelt wird.
